# EUROPÄISCHE PATENTANMELDUNG

(11) **EP 2 385 013 A1**
(43) Veröffentlichungstag der Anmeldung: **09.11.2011**
(21) Anmeldenummer: 10004642.4
(22) Anmeldetag: 03.05.2010
(51) Int. Cl.: B66F 9/075, B66F 9/24, G01S 11/14

(54) **Flurförderzeug mit einer Einrichtung zur Lageüberwachung eines geladenen Transportgutes, und Verfahren zur Lageüberwachung eines geladenen Transportgutes eines Flurförderzeugs**

(71) Anmelder: SIEMENS AKTIENGESELLSCHAFT, 80333 München (DE)
(72) Erfinder: Beichl, Walter, 71332 Waiblingen (DE); Wösch, Thomas, Dr., 81241 München (DE)

(57) **Zusammenfassung**

Flurförderzeug (FFZ) und ein Verfahren für ein Flurförderzeug (FFZ) zur Lageüberwachung eines geladenen Transportgutes (TG). Dazu ist das Flurförderzeug (FFZ) mit einer Einrichtung (ES, ES-S) zur Messung des Abstandes des Flurförderzeugs (FFZ) zu Objekten ausgerüstet ist, wobei es zur Unterscheidung von Messwerten der Abstandsmessungen zu Objekten außerhalb eines Ladebereiches des Flurförderzeugs (FFZ) und zu einem geladenen Transportgut (TG) innerhalb des Ladebereichs des Flurförderzeugs (FFZ) eingerichtet ist. Dabei werden zur Auswertung eine Mehrzahl von Messwerten innerhalb des Ladebereichs verwendet, wobei aus zumindest ein gemessenes geometrisches Merkmal (GMM1, ..., GMM4) des Transportgutes (TG) ermittelt wird und durch eine Inbezugsetzung des zumindest einen ermittelten geometrischen Merkmals (GMM1, ..., GMM4) zu als Sollwerte erwarteten geometrischen Merkmalen (EMM1, ..., EMM3) des Transportgutes (TG) eine Änderung der Lage des Transportgutes (TG) erfassbar ist.

## Beschreibung

Flurförderzeug mit einer Einrichtung zur Lageüberwachung eines geladenen Transportgutes, und Verfahren zur Lageüberwachung eines geladenen Transportgutes eines Flurförderzeugs

Die Erfindung betrifft ein Flurförderzeug mit einer Einrichtung zur Lageüberwachung seines Transportgutes gemäß dem Oberbegriff des Patentanspruchs 1, und ein Verfahren zur Lageüberwachung des Transportgutes eines Flurförderzeugs gemäß dem Oberbegriff des Patentanspruchs 11.

Flurförderzeuge werden in Produktionsanlagen und andere Einrichtungen für den Transport unterschiedlichster Transportgüter bzw. unterschiedlichster Ladung eingesetzt. Dabei gewinnen solche Flurförderzeuge vermehrt an Bedeutung, die fahrerlos und gesteuert durch einen Computer Transportaufgaben wahrnehmen.

Bekanntlich drohen bei fahrerlosem Betrieb und in anderen Anwendungsfällen, in denen ein Fahrer oder Aufsichtsperson die Ladung oder das Transportgut nicht beobachten kann, Gefahren durch eine verrutschte, verschobene oder gekippte Ladung.

Oft werden daher sowohl das Flurförderzeug bzw. dessen Ladebereich (z.B. Ladegabel) als auch die Transportgüter (z.B. Paletten) derart mechanisch konstruiert, dass eine Ladung nicht verrutschen oder verloren gehen kann. Dazu werden seitens der Flurförderzeuge beispielsweise Zentrierdorne vorgesehen, die in entsprechende Aufnahmen der Transportgüter eingreifen, oder andere formschlüssige Verbindungen verwendet. Nachteilig sind dabei eine geringe Flexibilität bei der Handhabung verschiedener Transportgüter und häufig komplexe Bewegungsabläufe beim Beladen und Entladen, die oft manuelle Eingriffe erfordern, so dass auf eine solche Sicherung der Ladung oft verzichtet werden muss.

Bei den Transportmitteln bzw. Flurförderzeugen ist es daher häufig notwendig, dass diese mit einer Einrichtung zur Lageüberwachung der Ladung bzw. des Transportgutes ausgestattet sind. Insbesondere bei fahrerlosen Flurförderzeugen sind dazu Sensoren gefordert, die im Falle einer derart drohenden Gefahr einen automatischen Nothalt veranlassen, einen Alarm auslösen oder andere Maßnahmen ermöglichen.

Eine Lösung ist die Überwachung der Ladung bzw. des Transportgutes durch berührungslose Schalter, die dazu aber derart angebracht werden müssen, dass eine Verschiebung sicher erkannt wird. Die dazu erforderlich Anordnung der Sensoren (Schalter) ist zudem oft abhängig vom jeweiligen Transportgut und daher aufwendig. Außerdem ermöglicht diese Lösung nur eine diskrete Entscheidung, z.B. "Transportgut vorhanden" oder "Transportgut verschoben". Toleranzen an den Übergabestationen o.ä. können nicht berücksichtigt oder ausgewertet werden.

Alternativ zu der Lösung mit den berührungslosen Schaltern können Transportgüter mit sog. "RFID-Tags" oder Barcode-Etiketten ausgestattet sein, die von entsprechenden Lesegräten seitens des Flurförderzeugs erfasst werden. Somit kann überprüft werden, ob ein Transportgut vorhanden ist, oder nicht. Allerdings müssen dazu sowohl alle Transportgüter als auch alle Flurförderzeuge entsprechend ausgerüstet sein, was entsprechenden Aufwand erfordert; es entstehen sowohl Fahrzeug-seitig als auch Transportgut-seitig zusätzlicher Aufwand und Kosten. Nachteile können weiter daraus entstehen, dass die Lageüberwachungsmittel (Etiketten, "Tags" etc.) verloren gehen oder unbrauchbar werden, beispielsweise durch Verschmutzung oder mechanische Einwirkung. Außerdem kann es vorkommen, dass die Transportgüter aus anderen Produktionsschritten bereits mit einer Vielzahl von Etiketten, "Tags" o.ä. versehen sind, die unterschiedliche Informationen enthalten und eine sichere Erkennung seitens des Flurförderzeugs erschweren. Ein weiteres Problem besteht darin, dass die Lageüberwachungsmittel der Transportgüter und die Erfassungsmittel der Flurförderzeuge aufeinander ausgerichtet sein müssen. Zwar kann im Beispiel der funkbasierten RFID-Tags auf eine Technologie mit einer höheren Reichweite zurückgegriffen werden, dadurch steigt jedoch das Risiko, dass auch solche Tags ausgelesen werden, die sich zufällig ebenfalls in der Reichweite des Lesegerätes befinden, obwohl diese gar nicht an dem gerade geladenen Transportgut befestigt sind. Außerdem können auch bei dieser Lösung Toleranzen an den Übergabestationen o.ä. nicht berücksichtigt oder ausgewertet werden.

Es ist also eine Aufgabe der vorliegenden Erfindung, eine zuverlässige und kostengünstige Möglichkeit zur Lageüberwachung von Transportgütern der Flurförderzeuge vorzuschlagen.

Es ist eine zentrale Idee der erfindungsgemäßen Lösung dieser Aufgabe, dass Sensoren zur berührungslosen Entfernungsmessung für die Lageüberwachung eines Transportgutes eingesetzt werden. Insbesondere die fahrerlosen Flurförderzeuge sind häufig ohnehin mit berührungslosen Entfernungs-Sensoren, beispielsweise 2D- oder schwenkbare "3D"-Laserscanner, ausgestattet, die zur Kollisionsvermeidung notwendig sind. Mit diesen Einrichtungen zur Entfernungsmessung wird erfindungsgemäß auch ein Teil des Transportgutes erfasst, wobei die dabei ermittelten Messwerte (Abstandswerte, Entfernungswerte) durch eine Auswerteeinrichtung verarbeitet und mit Sollwerten in Bezug gesetzt werden, woraus eine Lage oder eine Lageänderung, also beispielsweise eine Verschiebung des geladenen Transportgutes, erkannt werden kann.

Die Lösung der Aufgabe sieht insbesondere ein Flurförderzeug gemäß Patentanspruch 1 vor. Dieses Flurförderzeug ist erfindungsgemäß mit einer Einrichtung zur Lageüberwachung eines geladenen Transportgutes ausgestattet, indem es eine Einrichtung zur Messung des Abstandes des Flurförderzeugs zu Objekten aufweist. Diese Einrichtung ist mit einer Auswerteeinrichtung verknüpft, wobei die Auswerteeinrichtung zur Unterscheidung von Messwerten der Abstandsmessungen zu Objekten außerhalb eines Ladebereiches des Flurförderzeugs und zu einem geladenen Transportgut innerhalb des Ladebereichs des Flurförderzeugs eingerichtet ist. Dabei ist die Auswerteeinrichtung zur Auswertung einer Mehrzahl von Messwerten innerhalb des Ladebereichs eingerichtet, wobei aus der Mehrzahl dieser Messwerte zumindest ein gemessenes geometrisches Merkmal des Transportgutes ermittelt wird und wobei die Auswerteeinrichtung zur Inbezugsetzung des zumindest einen ermittelten geometrischen Merkmals zu als Sollwerte erwarteten geometrischen Merkmalen des Transportgutes eingerichtet ist, wobei die Auswerteeinrichtung zur Detektierung eine Änderung der Lage des Transportgutes anhand der Inbezugsetzung erkennt. Ein solches Flurförderzeug kann auch dann Transportgüter hinsichtlich ihrer Lage im Ladebereich überwachen, wenn dieses nicht mit separaten Lageüberwachungsmitteln, beispielsweise mechanischen Sensoren, Drucksensoren, Näherungsschaltern o.ä. ausgerüstet ist. Auch die Transportgüter müssen nicht mit separaten Etiketten oder anderen sensorisch erfassbaren Mitteln ausgerüstet sein.

Die Lösung der Aufgabe sieht weiterhin ein Verfahren zur Lageüberwachung eines Transportgutes eines Flurförderzeuges gemäß dem Patentanspruch 11 vor. Dabei wird ein Verfahren vorgeschlagen, bei dem in einem ersten Schritt mittels einer Einrichtung zur Abstandsmessung eine Mehrzahl von Abstandswerten zu Merkmales des Transportgutes im Erfassungsbereich der Einrichtung erfasst und gespeichert werden. In einem zweiten Schritt werden solche Messwerte für die weitere Verarbeitung selektiert, welche Merkmale in einem definierten Ladebereich des Flurförderzeugs (FFZ) betreffen. In einem dritten Schritt wird mittels der selektierten Messwerte zumindest ein gemessenes bzw. ermitteltes geometrische Merkmal Transportgutes im Ladebereich ermittelt, wonach in einem vierten Schritt das zumindest eine ermittelte geometrischen Merkmal mit zumindest einem als Sollwert gespeicherten erwarteten geometrischen Merkmal des Transportgutes in Bezug gesetzt wird, wobei in einem fünften Schritt anhand der Inbezugsetzung eine Veränderung der Lage des Transportgutes identifiziert wird. Durch dieses Verfahren können die Vorteile des erfindungsgemäßen Flurförderzeugs realisiert werden.

Vorteilhafte Ausgestaltungen des erfindungsgemäßen Flurförderzeuges sind in den abhängigen Patentansprüchen 2 bis 10 angegeben; vorteilhafte Ausgestaltungen des erfindungsgemäßen Verfahrens sind in den abhängigen Patentansprüchen 12 und 13 angegeben. Die dabei hinsichtlich des Flurförderzeugs beschriebenen Merkmale und Vorteile gelten sinngemäß auch für das erfindungsgemäße Verfahren, und umgekehrt gelten die hinsichtlich der vorteilhaften Ausgestaltungen des Verfahrens benannten Merkmale und Vorteile sinngemäß auch für das erfindungsgemäße Flurförderzeug.

Eine präzise Lageerkennung und damit Erkennung einer Lageänderung ist möglich, wenn die Auswerteeinrichtung zur Schätzung der tatsächlichen Lage des Transportgutes unter Anwendung eines Algorithmus' zur Zustandsschätzung eingerichtet ist, insbesondere, wenn die Schätzung der tatsächlichen Lage unter Verwendung eines statistischen Zustandsbeobachters, in einer besonders vorteilhaften Ausführung unter Verwendung eines Kalman-Filters, erfolgt.

Ein verschleißarmer Betrieb ist gegeben, wenn die Einrichtung zur Messung des Abstandes zur berührungslosen Entfernungsmessung eingerichtet ist; vorzugsweise ist die Einrichtung zur Messung des Abstandes ein 2-D oder 3-D-Laserscanner.

Besondere konstruktive und wirtschaftliche Vorteile ergeben sich dabei, wenn die Einrichtung zur Messung des Abstandes zur Kollisionsvermeidung bei der Bewegung des Flurförderzeugs verwendbar ist, wobei vorteilhaft die Einrichtung mit einer Fahrzeug-Steuerung des Flurförderzeugs verbunden ist. Dadurch kann zum Einen die Fahrzeugsteuerung im Regelbetrieb die Sensordaten der Einrichtung verwenden, und zum Anderen kann im Falle einer verrutschten Ladung ein automatischer Not-Halt des Flurförderzeugs erfolgen. Besonders vorteilhaft ist dabei, dass zur Durchführung der Lageüberwachung die ohnehin an fahrerlosen Flurförderzeugen angebrachten Laserscanner o.ä. verwendet werden können, so dass oft keinerlei zusätzliche Hardware verbaut werden muss.

Die Steuerung zur Kollisionsvermeidung ist zur Differenzierung der gemessenen Abstandswerte vorteilhaft derart eingerichtet, dass nur solche Messwerte berücksichtigt werden, deren Entfernungs- und/oder Winkelwerte Punkte oder Objekte außerhalb des Ladebereichs betreffen.

Ein vorwiegend automatischer Betrieb ist möglich, wenn die gespeicherten, erwarteten geometrischen Merkmale des Transportgutes durch zumindest eine Trainings-Messung mit dem Transportgut oder mit einem ähnlichen Transportgut (gleiche Transportgut-Klasse) bei oder nach einem Ladevorgang erfassbar und speicherbar sind. Alternativ sind die gespeicherten geometrischen Merkmale manuell administrierbar.

Eine quasi-permanente Überwachung kann realisiert werden, indem das Verfahren während einer Fahrt des Flurförderzeugs wiederholt durchgeführt wird. Dabei wird vorteilhaft im Falle einer detektierten Lageabweichung, die über einen vorherbestimmten Sollwert hinausgeht, von der Auswerteeinrichtung ein Signal ausgegeben oder ein Not-Stopp ausgelöst.

Ein Ausführungsbeispiel des erfindungsgemäßen Flurförderzeugs wird nachfolgend anhand der Zeichnungen erläutert. Es dient gleichzeitig der Erläuterung eines Ausführungsbeispiels des erfindungsgemäßen Verfahrens.

Dabei zeigen:
- Figur 1: in einer schematischen Seitenansicht ein Flurförderzeug mit einer Palette mit einem Transportgut und mit einer Einrichtung zur Entfernungsmessung,
- Figur 2: die geometrischen Merkmale des Transportgutes nach dem Beladen ("erwartete Merkmale"),
- Figur 3: die während der Fahrt erfassten (gemessenen) geometrischen Merkmale des Transportgutes, und
- Figur 4: in einer schematischen Seitenansicht ein Flurförderzeug mit einer alternativ angeordneten Einrichtung zur Messung des Abstandes.

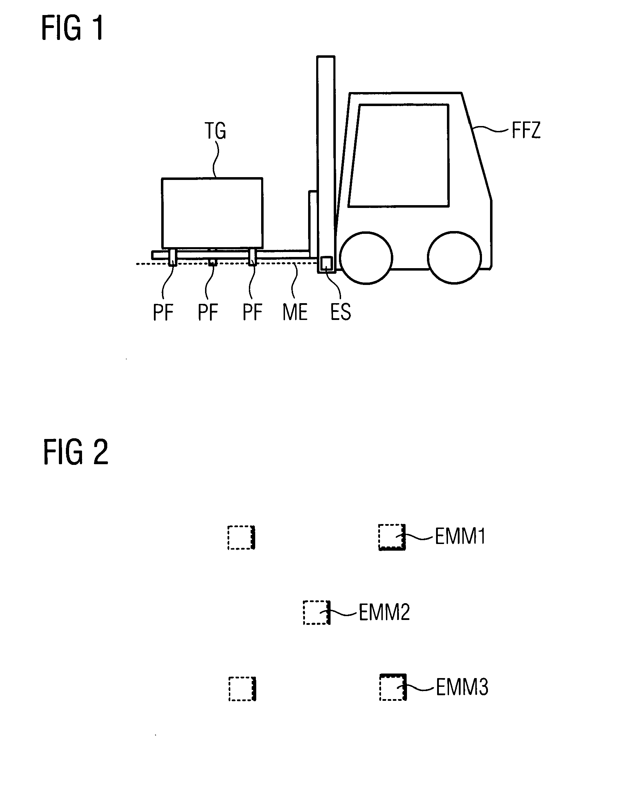

In der Figur 1 ist ein Flurförderzeug FFZ dargestellt, welches im vorliegenden Ausführungsbeispiel als ein fahrerloser Gabelstapler ausgeführt ist. Die Hauptbewegungsrichtung ("vorwärts") des Flurförderzeugs FFZ ist im Beispiel der Figur 1 nach rechts; die "Rückwärtsrichtung" demzufolge nach links als Einrichtung zur Messung eines Abstandes, also in Richtung der Ladegabel. Das Flurförderzeug FFZ ist mit einem Entfernungssensor ES ausgerüstet, welcher als 2-D-Laserscanner ausgeführt ist und im unteren Bereich des Flurförderzeugs FFZ angebracht ist. Der hier dargestellte Entfernungssensor ES ist zur fächerförmigen Aussendung von Messstrahlen in einem Radius von nahezu 180° in einer Ebene parallel zum Boden eingerichtet, wobei der nahezu halbkreisförmige Erfassungsbereich die "Rückwärts-Richtung" des Flurförderzeugs FFZ abdeckt, also bezogen auf die Figur 1 nach links gerichtet ist. Dadurch ergibt sich eine 2-dimensionale halbkreisförmige Messebene ME, die in der Schnittdarstellung der Figur 1 in Form einer gepunkteten Linie dargestellt ist. Der Ladebereich des Flurförderzeugs FFZ wird im Wesentlichen durch den Raum oberhalb der Ladegabel gebildet, wobei auch Teile der Ladung, insbesondere die Stützfüße einer Euro-Palette oder einer anderen Palette, auch um die Zinken der Ladegabel herum angeordnet sein können und somit in einen Raum unterhalb der Ladegabel hineinragen können; diese Teile der Palette oder des Transportgutes TG werden im Folgenden als Palettenfüße PF bezeichnet und bilden im Rahmen des hier erläuterten Ausführungsbeispiels die geometrischen Merkmale, auf die sich eine Lageüberwachung des Transportgutes TG stützt.

Der hier gezeigte Entfernungssensor ES ist primär zur Kollisionsvermeidung des Flurförderzeugs FFZ bei Rückwärtsfahrt eingerichtet, wobei im Falle einer Rückwärtsfahrt das Transportgut TG temporär angehoben werden kann, um eine Beeinträchtigung der Erfassung von Objekten und anderen Hindernissen durch das Transportgut TG, die Ladegabel und die Palettenfüße PF zu vermeiden. Im Folgenden wird erläutert, wie derselbe Entfernungssensor ES zur Lageüberwachung des Transportgutes TG anhand dessen Geometrie bzw. geometrischer Merkmale verwendet wird.

Für die Lageüberwachung des Transportgutes TG wird nun vorausgesetzt, dass ein Steuerungs-Computer des Flurförderzeugs FFZ nicht nur zur Steuerung der Bewegung des Flurförderzeuges FFZ eingerichtet ist, sondern auch zusätzlich eine Auswerteeinheit aufweist, welche durch eine Software des Steuerungs-Computers realisiert ist.

In der Figur 2 ist ein Muster ermittelter geometrischer Merkmale EMM1, EMM2, EMM3 dargestellt, wobei das Transportgut TG fünf Palettenfüße PF aufweist. Charakteristische geometrische Merkmale dieses "Foot Prints" sind in der Auswerteeinheit des Flurförderzeugs FFZ abgelegt bzw. durch diese Auswerteeinheit aus einer Datenbank abrufbar. Dabei wird nicht der "Foot Print" als solcher gespeichert, sondern erste, erwartete Merkmale EMM1, ..., EMM3. Aus Sicht eines Entfernungssensors ES, der bezogen auf die Figur 2 am rechten Bildrand angeordnet ist, sind für das Transportgut TG in der Figur 2 drei erwartete Merkmale EMM1, EMM2, EMM3 dargestellt, wobei sowohl die Geometrie des Merkmals, also beispielsweise Ecke, Linie, Rundung o.ä., als auch der jeweilige Abstand des Merkmals zu dem Entfernungssensor ES gespeichert werden. Für den Fall, dass bezogen auf die Figur 2 der Entfernungssensor ES in einer vertikalen Ebene des mittleren Palettenfußes angeordnet ist, bildet dieser mittlere Palettenfuß bei Verwendung eines 2-D-Laserscanners ein Stück Linie, so dass als das erwartete Merkmal EMM2 in einem mittleren Erfassungsbereich, also in Erfassungsrichtung "rückwärts", eine Linie mit einer definierten Länge gespeichert ist. Rechts und links von dieser Richtung sind die erwarteten Merkmale EMM1, EMM3 angeordnet, wobei aus Sicht des Entfernungssensors ES jeweils eine "Ecke" sichtbar ist, deren Spitze in Richtung des Entfernungssensors ES gerichtet ist, also konvex sichtbar ist.

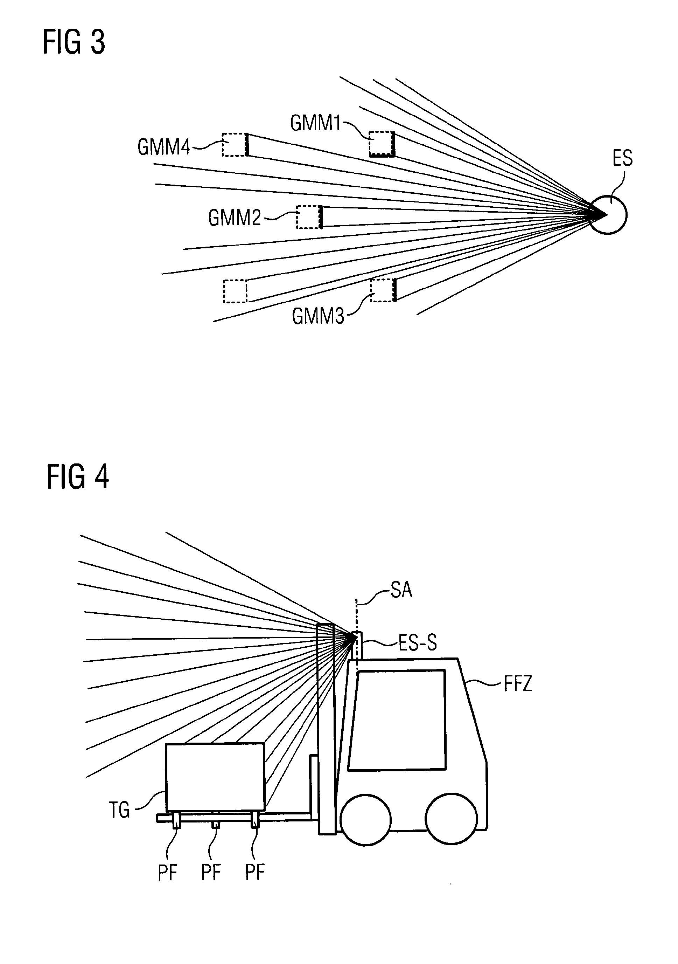

Der Fall, in dem das Transportgut TG zu einem späteren Zeitpunkt, also beispielsweise während der Fahrt, von dem Entfernungssensor ES erfasst wird, ist in der Figur 3 dargestellt. Dort ist neben dem Entfernungssensor ES in einer Draufsicht ein "Strahlenbündel" verschiedener Entfernungsmessungen dargestellt, wobei angenommen wird, dass jeder Palettenfuß PF von einer Vielzahl von Messstrahlen und damit mehreren Entfernungsmessungen erreicht wird, wobei aus der Vielzahl von Einzelmessungen "gemessene" geometrische Merkmale oder Objekte wie Linien, Ecken, Rundungen etc. berechnet werden können. Im Falle der Figur 3 werden vier gemessene Merkmale GMM1, ..., GMM4 erfasst; solche Merkmale werden auch als "Primitive" bezeichnet. Bezogen auf eine gedachte Mittellinie, die der "Rückwärts"-Richtung bei einer Bewegung des Flurförderzeugs FFZ entspricht, detektiert die Auswerteeinrichtung anhand der Messergebnisse in einem rechten Bereich das gemessene Merkmal GMM1, welches eine Ecke (konvex) darstellt. Daneben wird das gemessene Merkmal GMM4 detektiert, welches in der zweidimensionalen Sicht des Laserscanners als ein kurzes Stück geschlossener Linie erscheint. Im mittleren Bildbereich wird das gemessene Merkmal GMM2 erfasst, welches ebenfalls als Linie detektiert wird. Schließlich wird links der Mitte das gemessene Merkmal GMM3 detektiert, welches als eine Ecke (konvex) erscheinen kann, jedoch aufgrund von Messunsicherheiten wie dargestellt auch - fälschlicher Weise - als Linie erfasst werden kann.

Diese gemessenen Merkmale GMM1, ..., GMM4 werden durch die Auswerteeinheit vorzugsweise mittels eines Kalman-Filters verarbeitet, wobei mittels des Filters ein Wert für die tatsächliche Lage des Transportgutes geschätzt wird. Ebenso werden die erwarteten Merkmale EMM1,..., EMM3 mittels des Kalman-Filters in eine Lageschätzung umgesetzt; dieser Vorgang braucht nur einmal durchgeführt werden. Obwohl die gemessenen Merkmale GMM1, ..., GMM4 durchaus von den erwarteten Merkmalen EMM1, ..., EMM3 des Transportgutes TG abweichen, nämlich hinsichtlich der Merkmale EMM2, GMM2, GMM4, ist durch das Kalman-Filter dennoch jeweils eine Schätzung der Lage möglich. Es ist dabei eine bekannte Eigenschaft des Kalman-Filters, dass trotz Mess-Unsicherheiten zuverlässige Ergebnisse errechnet werden können. Eine Inbezugsetzung (hier: Differenzbildung) der anhand der gemessenen Merkmale GMM1, ..., GMM4 geschätzten Lage bzw. Wert mit der anhand der erwarteten Merkmale EMM1,..., EMM3 errechneten Lage bzw. Wert führt zu einem Differenzwert (sog. "Lage-Delta"). Sofern dieser einen vorher definierbaren Schwellwert (Maximalabweichung oder Maximal-Verschiebung) überschreitet, wird von einer unzulässigen Verschiebung (Verrutschen, Verlust) der Ladung ausgegangen, so dass ein Alarm ausgelöst und/oder das Flurförderzeug FFZ automatisch angehalten wird. Vorteilhaft werden während der Fahrt des Flurförderzeugs laufend neue Messungen durchgeführt, die laufend aktualisierte Werte für die Lage des Transportgutes (TG) liefern, so dass ständig ein neuer Differenzwert ermittelt wird.

In der Figur 4 ist beispielhaft eine andere Anordnung eines Entfernungssensors ESS-S an dem Flurförderzeug FFZ dargestellt, wobei der Entfernungssensor ES-S (Entfernungssensorschwenkbar) mehrere Ebenen nacheinander abtasten kann und somit ein 3-dimensionales Abbild erzeugen kann. Dazu ist der Entfernungssensor ES-S derart angeordnet, dass dieser ein fächerartiges Messstrahlenbündel in einer Ebene senkrecht zur Fahrbahn aussendet. Der Entfernungsmesser ES-S ist dazu in die Schwenkachse SA schwenkbar, so dass durch die sukzessive Abtastung mehrerer Ebenen ein dreidimensionales Abbild erfasster Gegenstände und Objekte gewonnen werden kann. Vorteilhaft kann hier auch ein Sensor eingesetzt werden, der unmittelbar das dreidimensionale Abbild liefert (3-D-Laserscanner, 3-D-Kamera). Hierbei werden nicht die Palettenfüße PF nach geometrischen Merkmalen untersucht, sondern das Transportgut TG als solches bzw. dessen oben liegende Oberflächen. In einer weiteren vorteilhaften, hier nicht dargestellten Anordnung können auch Messergebnisse verschiedener Entfernungssensoren ES, ES-S miteinander kombiniert werden.

Im vorliegenden Ausführungsbeispiel können durch einen Administrationsvorgang manuell die Daten für die erwarteten Merkmale EMM1, ... EMM3 (und weitere erwartete Merkmale) für das Transportgut TG und andere Transportgüter eingegeben wurden. Es kann aber auch nach jedem Lade-Vorgang, der beispielsweise von einer Kontroll-Person oder Kontroll-Einrichtung als "korrekt" quittiert wurde, eine einmalige Erfassung erwarteten Merkmale EMM1, ..., EMM3 durchgeführt werden, womit die Sollwerte für die betreffende Fahrt gespeichert werden.

Alternativ können auch verschiedene Transportgüter TG in einem Trainingsmodus durch die Auswerteeinheit erfasst werden und die dabei detektierten Merkmale jeweils automatisch als erwartete Merkmale in einer Datenbank dem jeweiligen Transportgut TG zugeordnet abgespeichert werden. Alternativ können auch lediglich die anhand dieser erwarteten Merkmale EMM1, ... EMM3 durch das Kalman-Filter errechneten Lage-Werte gespeichert werden. Bei Verwendung derart gespeicherter Sollwerte kann somit nicht nur eine Veränderung der Lage während der Fahrt detektiert werden, sondern bei bekanntem Transportgut TG kann schon beim Beladen festgestellt werden, ob das Transportgut TG korrekt, also lagerichtig, geladen wurde.

## Patentansprüche

1. Flurförderzeug (FFZ) mit einer Einrichtung zur Lageüberwachung eines geladenen Transportgutes (TG), **dadurch gekennzeichnet,**
**dass** das Flurförderzeug (FFZ) mit einer Einrichtung (ES, ES-S) zur Messung des Abstandes des Flurförderzeugs (FFZ) zu Objekten ausgerüstet ist,
wobei die Einrichtung (ES, ES-S) zur Messung des Abstandes mit einer Auswerteeinrichtung verknüpft ist, dass die Auswerteeinrichtung zur Unterscheidung von Messwerten der Abstandsmessungen zu Objekten außerhalb eines Ladebereiches des Flurförderzeugs (FFZ) und zu einem geladenen Transportgut (TG) innerhalb des Ladebereichs des Flurförderzeugs (FFZ) eingerichtet ist, wobei die Auswerteeinrichtung zur Auswertung einer Mehrzahl von Messwerten innerhalb des Ladebereichs eingerichtet ist,
wobei aus der Mehrzahl dieser Messwerte zumindest ein gemessenes geometrisches Merkmal (GMM1, ..., GMM4) des Transportgutes (TG) ermittelt wird, und
**dass** die Auswerteeinrichtung zur Inbezugsetzung des zumindest einen ermittelten geometrischen Merkmals (GMM1, ..., GMM4) zu als Sollwerte erwarteten geometrischen Merkmalen (EMM1, ..., EMM3) des Transportgutes (TG) eingerichtet ist,
wobei die Auswerteeinrichtung zur Detektierung einer Änderung der Lage des Transportgutes (TG) anhand der Inbezugsetzung eingerichtet ist.

2. Flurförderzeug (FFZ) nach Patentanspruch 1,
**dadurch gekennzeichnet, dass**
die Auswerteeinrichtung zur Schätzung der tatsächlichen Lage des Transportgutes unter Anwendung eines Algorithmus' zur Zustandsschätzung eingerichtet ist.

3. Flurförderzeug (FFZ) Patentanspruch 2,
**dadurch gekennzeichnet, dass**
die Schätzung der tatsächliche Lage unter Verwendung eines statistischen Zustandsbeobachters erfolgt.

4. Flurförderzeug (FFZ) Patentanspruch 2 oder 3,
**dadurch gekennzeichnet, dass**
die Schätzung der tatsächliche Lage unter Verwendung eines Kalman-Filters erfolgt.

5. Flurförderzeug (FFZ) nach einem der vorhergehenden Patentansprüche,
**dadurch gekennzeichnet,**
**dass** die Einrichtung zur Messung des Abstandes (ES, ES-S) zur berührungslosen Entfernungsmessung eingerichtet ist.

6. Flurförderzeug (FFZ) nach Patentanspruch 5,
**dadurch gekennzeichnet,**
**dass** die Einrichtung zur Messung des Abstandes (ES, ES-S) ein 2-D oder 3-D-Laserscanner oder 3-D-Kamera ist.

7. Flurförderzeug (FFZ) nach einem der Patentansprüche 5 oder 6,
**dadurch gekennzeichnet,**
**dass** die Einrichtung zur Messung des Abstandes (ES, ES-S) zur Kollisionsvermeidung bei der Bewegung des Flurförderzeugs (FFZ) verwendbar ist,
wobei die Einrichtung mit einer Fahrzeug-Steuerung des Flurförderzeugs (FFZ) verbunden ist.

8. Flurförderzeug (FFZ) nach Patentanspruch 7,
**dadurch gekennzeichnet,**
**dass** die Steuerung zur Kollisionsvermeidung derart eingerichtet ist, dass nur solche Messwerte berücksichtigt werden, deren Entfernungs- und/oder Winkelwerte Punkte oder Objekte außerhalb des Ladebereichs betreffen.

9. Flurförderzeug (FFZ) nach einem der vorhergehenden Patentansprüche,
**dadurch gekennzeichnet,**
**dass** die gespeicherten, erwarteten geometrischen Merkmale (EMM1, ..., EMM3) des Transportgutes (TG) durch zumindest eine Trainings-Messung mit dem Transportgut (TG) oder mit einem ähnlichen Transportgut (TG) bei oder nach einem Ladevorgang erfassbar und speicherbar sind.

10. Flurförderzeug (FFZ) nach einem der vorhergehenden Pa- tentansprüche,
**dadurch gekennzeichnet,**
**dass** die gespeicherten geometrischen Merkmale (EMM1, ..., EMM3) manuell administrierbar sind.

11. Verfahren zur Überwachung der Lage eines geladenen Transportgutes (TG) eines Flurförderzeugs (FFZ), **dadurch gekennzeichnet, dass**
- in einem ersten Schritt mittels einer Einrichtung zur Abstandsmessung eine Mehrzahl von Abstandswerten zu Merkmales des Transportgutes (TG) im Erfassungsbereich der Einrichtung erfasst und gespeichert werden,
- in einem zweiten Schritt solche Messwerte für die weitere Verarbeitung selektiert werden, welche Merkmale in einem definierten Ladebereich des Flurförderzeugs (FFZ) betreffen,
- in einem dritten Schritt mittels der selektierten Messwerte zumindest ein ermitteltes geometrisches Merkmal (GMM1, ..., GMM4) Transportgutes (TG) im Ladebereich ermittelt wird,
- in einem vierten Schritt die ermittelten geometrischen Merkmale (GMM1, ..., GMM4) mit zumindest einem als Sollwert gespeicherten erwarteten geometrischen Merkmal (EMM1, ..., EMM3) des Transportgutes (TG) in Bezug gesetzt wird, und
- in einem fünften Schritt anhand der Inbezugsetzung eine Veränderung der Lage des Transportgutes (TG) identifiziert wird.

12. Verfahren nach Patentanspruch 11,
**dadurch gekennzeichnet,**
**dass** das Verfahren während einer Fahrt des Flurförderzeugs (FFZ) wiederholt durchgeführt wird.

13. Verfahren nach Patentanspruch 11 oder 12,
**dadurch gekennzeichnet,**
**dass** im Falle einer detektierten Lageabweichung, die über einen vorherbestimmten Sollwert hinausgeht, von der Auswerteeinrichtung ein Signal ausgegeben wird.
